# DEMANDE DE BREVET EUROPEEN

(11) **EP 3 617 048 A1**
(43) Date de publication de la demande: **04.03.2020**
(21) Numéro de dépôt: 18191095.1
(22) Date de dépôt: 28.08.2018
(51) Int. Cl.: B62J 6/02, B60Q 1/08, B60Q 1/10, B60Q 1/12

(54) **DISPOSITIF D'ÉCLAIRAGE ACTIF PORTABLE OU PLACÉ SUR UN VÉHICULE**

(71) Demandeur: The Swatch Group Research and Development Ltd, 2074 Marin (CH)
(72) Inventeur: Matthey, Olivier, 1422 Grandson (CH); Willemin, Michel, 2515 Prêles (CH); Scagliarini, Bruno, 1586 Vallamand (CH)
(74) Mandataire: ICB SA

(57) **Abrégé**

Le dispositif (1) d'éclairage actif d'un véhicule comprend une première optique (A) avec un premier agencement (6) de sources de lumière pour une illumination à grande distance, qui sont contrôlée par une unité de contrôle (2), et une seconde optique (B) avec un second agencement (7) de sources de lumière pour une illumination à courte distance, qui sont contrôlées par l'unité de contrôle. Il comprend un capteur de lumière (3) pour déterminer l'intensité lumineuse d'un endroit où se situe le véhicule et permettre à l'unité de contrôle d'adapter l'intensité lumineuse des sources de lumière, si elles sont activées et si l'intensité de lumière ambiante est en dessous d'un seuil de lumière déterminé. De plus, il est prévu un capteur de vitesse (4a,4b) pour déterminer la vitesse du véhicule en utilisation sur un chemin, pour que l'unité de contrôle commande l'activation des sources de lumière du premier agencement de sources de lumière à partir d'au moins un seuil de vitesse déterminé. Il est aussi prévu un détecteur d'orientation ou d'inclinaison (5a,5b,5c) pour sélectionner et régler en intensité lumineuse au moins certaines sources de lumière ou certains groupes de sources de lumière des premier et second agencements de sources de lumière.

## Description

### DOMAINE TECHNIQUE DE L'INVENTION

L'invention concerne un dispositif d'éclairage actif portable ou placé sur un véhicule à au moins une roue, tel qu'un vélo. De préférence, chaque dispositif d'éclairage dispose d'une première optique à au moins un premier agencement de sources de lumière, et d'une seconde optique à au moins un second agencement de sources de lumière, qui sont placés sur le véhicule.

### ETAT DE LA TECHNIQUE

Pour éclairer de manière adéquate un chemin ou une route empruntée par un véhicule, il est connu d'utiliser un dispositif d'éclairage ayant un réglage adapté de l'intensité de la lumière générée de phares ou d'autres sources de lumière. Un tel dispositif d'éclairage peut aussi être adapté pour orienter le faisceau de lumière en fonction des virages à effectuer dans l'obscurité ou pour éviter d'éblouir un conducteur d'un véhicule à croiser sur la route.

La demande de brevet WO 2017/23293 A1 décrit un système d'illumination intelligent pour un véhicule à deux roues, tel qu'une bicyclette. Il comprend un agencement de diodes électroluminescentes LED, qui peuvent être sélectionnées indépendamment pour définir une intensité lumineuse désirée. Il est prévu aussi des moteurs pour orienter la lumière selon la hauteur ou l'inclinaison du vélo, des capteurs du mouvement ou d'intensité lumineuse, et un agencement de lumière en fonction de la vitesse du vélo. Cependant toutes les diodes LED sont orientées en même temps par les moteurs et non indépendamment l'une de l'autre. De plus, rien n'est spécifié concernant l'orientation de chaque faisceau de lumière des diodes LED pour adapter la distance de rayonnement et l'intensité de chaque diode LED en fonction de la vitesse ou de l'intensité de lumière détectée, ce qui peut constituer un inconvénient.

La demande de brevet US 2018/0020528 A1 décrit un système d'illumination intelligent pour un vélo. Un agencement de lumière peut être prévu sur la fourche avant du vélo ou aussi sur le casque de la personne à vélo. Il comprend un détecteur de mouvement pour capter l'accélération et la vitesse, et des moyens pour tourner la source de lumière en fonction d'un virage ou de la vitesse et aussi au mouvement de la tête du cycliste de telle manière à ce que le faisceau de lumière soit toujours en ligne avec la direction des yeux du cycliste en regard de la route. Cependant il n'est pas prévu d'orienter différemment deux sources de lumière pour éclairer la route en fonction de la vitesse ou de la luminosité ambiante, ce qui peut constituer un inconvénient.

Le brevet EP 3 036 149 B1 décrit un dispositif d'éclairage pour une bicyclette avec plusieurs diodes LED à disposition. Il est prévu aussi un capteur de lumière. Un élément de commande est prévu pour comparer l'accélération, l'orientation et la vitesse du cycliste selon des données de référence. Une sélection des diodes LED est aussi prévue, mais également pas pour orienter différemment au moins deux sources de lumière pour éclairer la route suivie, ce qui constitue un inconvénient.

Il est également connu par le brevet FR 2 844 759 B1, un phare gyrostable pour une moto. Des moyens sont prévus pour orienter la lumière en fonction des virages effectués notamment. Cependant, rien n'est décrit pour orienter différemment au moins deux sources de lumière pour éclairer la route suivie en tenant compte de la vitesse et de l'intensité de lumière détectée, ce qui constitue un inconvénient.

### RÉSUMÉ DE L'INVENTION

L'invention a donc pour but de pallier les inconvénients cités ci-dessus pour réaliser un dispositif d'éclairage actif portable ou placé sur un véhicule à au moins une roue facile d'utilisation et sans complication pour permettre un bon éclairage tenant compte de la vitesse ou de l'inclinaison du véhicule.

A cet effet, l'invention concerne un dispositif d'éclairage actif portable ou placé sur un véhicule à au moins une roue, qui comprend les caractéristiques des revendications indépendantes 1 ou 2.

Des formes d'exécution particulières du dispositif d'éclairage sont définies dans les revendications dépendantes 3 à 13.

Un avantage du dispositif d'éclairage selon l'invention réside dans le fait qu'un capteur de lumière du dispositif détecte l'intensité de la lumière ambiante de manière à activer des sources de lumière ou des groupes de sources de lumière des optiques A et B, si l'intensité de lumière ambiante est en dessous d'un seuil de lumière déterminé. L'activation des sources de lumière ou groupes de sources de lumière peut se faire de manière automatique sur commande d'une unité de contrôle alimentée par une source de tension d'alimentation, telle qu'une batterie.

Avantageusement, l'intensité de lumière des sources de lumière activées ou groupes de sources de lumière activées est gérée par l'unité de contrôle normalement inversement proportionnelle à l'intensité de la lumière ambiante.

Avantageusement, un capteur de vitesse est prévu dans le dispositif d'éclairage pour activer des sources de lumière ou des groupes de sources de lumière de l'optique A uniquement si une vitesse du véhicule en utilisation dépasse un seuil de vitesse déterminé. Des sources de lumière ou des groupes de sources de lumière de l'optique B peuvent être activées dès que l'intensité de lumière ambiante est en dessous du seuil de lumière déterminé, et ceci indépendamment de la vitesse du véhicule.

Avantageusement, au moins un détecteur d'orientation ou d'inclinaison peut aussi être prévu dans le dispositif d'éclairage pour sélectionner et régler en intensité lumineuse au moins certaines sources de lumière ou certains groupes de sources de lumière du premier agencement de sources de lumière et/ou du second agencement de sources de lumière. L'éclairage des sources de lumière ou groupes de sources de lumière sélectionnés, éventuellement en combinaison avec un jeu de lentilles, permet d'orienter le faisceau de lumière résultant provenant de chaque agencement de sources de lumière dans une direction fonction du virage effectué sur une route ou un chemin.

### BRÈVE DESCRIPTION DES FIGURES

Les buts, avantages et caractéristiques d'un dispositif d'éclairage actif portable ou placé sur un véhicule à au moins une roue, apparaîtront mieux dans la description suivante sur la base d'au moins une forme d'exécution non limitative illustrée par les dessins sur lesquels :

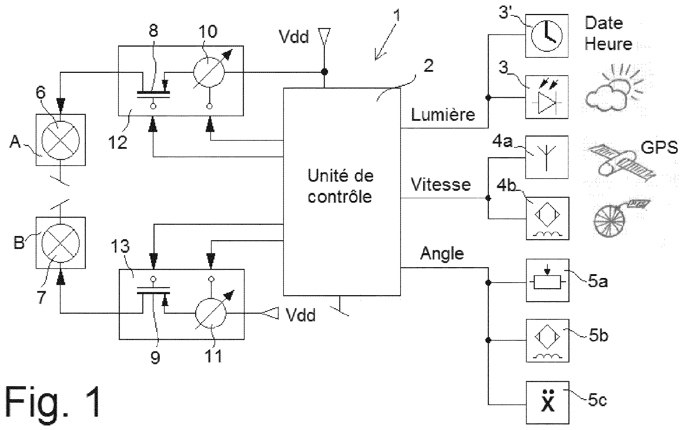

- la figure 1 représente un schéma bloc simplifié des composants du dispositif d'éclairage actif selon l'invention,

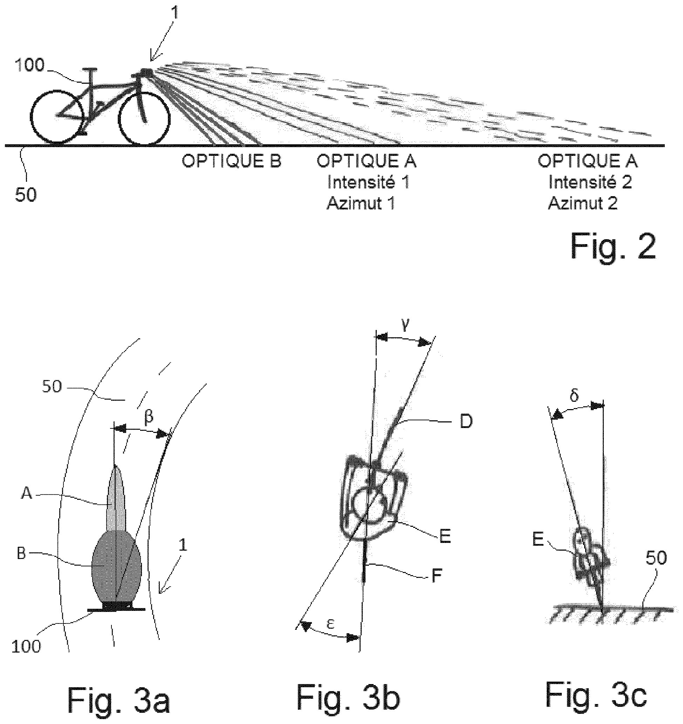

- la figure 2 représente schématiquement un véhicule sur une route ou un chemin avec les sources de lumière activées des deux optiques A et B du dispositif d'éclairage actif en tenant compte de l'intensité de lumière et de la vitesse mesurée pour sélectionner et régler en intensité lumineuse au moins certaines sources de lumière ou certains groupes de sources de lumière de l'optique A selon l'invention, et
- les figures 3a, 3b et 3c montrent schématiquement un véhicule sur une route ou un chemin prenant un virage pour sélectionner et régler en intensité lumineuse au moins certaines sources de lumière ou certains groupes de sources de lumière des optiques A et B du dispositif d'éclairage actif selon l'invention.

### DESCRIPTION DETAILLEE DE L'INVENTION

Dans la description suivante, il est fait référence à un dispositif d'éclairage actif portable ou placé sur un véhicule à au moins une roue. Tous les composants électroniques, qui sont bien connus d'un homme du métier dans ce domaine technique, ne sont décrits que de manière simplifiée. Le véhicule peut être par exemple un vélo à deux roues de manière à être mis en mouvement par un utilisateur sur un chemin, par exemple sur un chemin routier ou en forêt.

La figure 1 représente de manière simplifiée les différents composants d'un dispositif 1 d'éclairage actif portable ou placé sur un véhicule, qui peut être par exemple un vélo. Le dispositif 1 d'éclairage comprend principalement deux optiques référencées A et B. La première optique A comprend au moins un premier agencement 6 de sources de lumière, alors que la seconde optique B comprend au moins un second agencement 7 de sources de lumière. Le premier agencement 6 de sources de lumière est prévu pour une illumination à grande distance et de préférence à intensité variable. Le second agencement 7 de sources de lumière est prévu pour une illumination à courte distance et de préférence à intensité variable.

Chaque agencement 6, 7 de sources de lumière peut comprendre des diodes électroluminescentes ou des groupes de diodes électroluminescentes sélectionnables par l'unité de contrôle 2 ou toutes activables en même temps. Il peut être compté au moins deux sources de lumière par agencement 6, 7 de sources de lumière. De préférence, il peut être prévu au moins trois sources de lumière par agencement 6, 7 de sources de lumière susceptibles chacune de générer un faisceau lumineux sous la forme d'un cône ayant une direction ou axe d'illumination différent. L'orientation du faisceau lumineux est fournie directement en sortie de chaque source de lumière ou par l'intermédiaire d'une ou plusieurs lentilles. De cette manière, il peut être sélectionné certaines sources de lumière par l'unité de contrôle 2 s'il faut orienter le faisceau moyen de lumière fourni par chaque agencement 6, 7 de sources de lumière activé. Ceci permet d'orienter le faisceau moyen en fonction d'un virage effectué par l'utilisateur du véhicule.

Il est à noter encore que chaque agencement 6, 7 de sources de lumière peut comprendre une matrice de sources de lumière, telles que des diodes électroluminescentes LED, qui peuvent être sélectionnées indépendamment l'une de l'autre ou par groupes de diodes électroluminescentes. La matrice peut par exemple comprendre x² diodes électroluminescentes, où x est un nombre entier supérieur ou égal à 2. Par exemple, on peut prévoir 64 diodes électroluminescentes par agencement 6, 7 de sources de lumière.

Généralement, chaque optique A et B comprend encore en plus des agencements 6, 7 de sources de lumière, un agencement de lentilles combinées aux sources de lumière, et miroirs non représenté pour la fourniture d'un faisceau de lumière d'orientation déterminée. Dans le cas de figure représenté à la figure 1, les sources de lumière des agencements 6, 7 sont commandées par une unité de contrôle 2 reliée à une source d'alimentation continue Vdd. Cette source d'alimentation électrique est de préférence une source de tension continue, qui provient d'une batterie rechargeable ou primaire, ou qui est extraite et redressée d'un rayonnement électromagnétique reçu.

Le dispositif 1 d'éclairage comprend encore un ou plusieurs capteurs 3, 4a, 4b, 5a, 5b, 5c reliés à l'unité de contrôle 2 pour permettre l'activation de chaque agencement 6, 7 de sources de lumière selon un paramètre mesuré. De préférence, l'unité de contrôle 2, alimentée par la source de tension continue Vdd, est agencée, dès l'utilisation du véhicule, pour contrôler l'éclairage des sources de lumière des premier et second agencements 6, 7 des première et seconde optiques A, B de manière automatique.

L'unité de contrôle 2 peut comprendre encore un oscillateur à basse fréquence, qui peut être un oscillateur à quartz horloger ou MEMS, et au moins une mémoire volatile ou non volatile. Ainsi, l'unité de contrôle 2 peut être un microcontrôleur. La mémoire volatile ou non volatile non représentée permet de mémoriser des mesures effectuées par le ou les capteurs et au moins un algorithme de calcul pour la gestion et les calculs des mesures effectuées par les capteurs 3, 4a, 4b, 5a, 5b, 5c.

Le dispositif 1 d'éclairage comprend principalement un capteur d'intensité lumineuse ou capteur de lumière 3, qui peut être composé d'une cellule solaire ou d'un réseau de cellules solaires. A partir d'un seuil de luminosité détecté par le capteur d'intensité lumineuse 3, l'unité de contrôle 2 commande l'activation d'au moins certaines sources de lumière ou des groupes de sources de lumière de la première optique A et de la seconde optique B. Ceci est effectué si l'intensité de lumière ambiante est en dessous d'un seuil de lumière déterminé. Le seuil d'intensité lumineuse peut dépendre directement de la luminosité ambiante, où se situe le véhicule en utilisation. De plus, l'intensité lumineuse des sources de lumière activées, ou des groupes de sources de lumière activées peut être variable et normalement inversement proportionnelle au changement d'intensité de la luminosité ambiante.

Il est à noter que certaines sources de lumière ou des groupes de sources de lumière du second agencement 7 de la seconde optique B sont toujours activées dès que l'intensité de la lumière ambiante est en dessous du seuil d'intensité lumineuse déterminé, lors de l'utilisation du véhicule. Par contre, certaines sources de lumière ou des groupes de sources de lumière du premier agencement 6 de la première optique A sont activées seulement si l'intensité de la lumière ambiante est insuffisante et en plus avec une condition supplémentaire comme décrit ci-dessous.

Bien entendu, lorsque le véhicule n'est plus en utilisation, il peut aussi être prévu un interrupteur manuel de manière à désactiver le dispositif d'éclairage avec toutes les sources de lumière. Lesdites sources de lumière peuvent être aussi désactivées après une période d'inutilisation du véhicule, c'est-à-dire après un temps déterminé sans mouvement par exemple après 5 minutes.

Dans une première variante de forme d'exécution du dispositif 1, le dispositif 1 d'éclairage comprend au moins un capteur de vitesse 4a, 4b relié à l'unité de contrôle 2. Lors de l'utilisation du véhicule, le capteur de vitesse 4a, 4b détermine la vitesse du véhicule et, à partir du dépassement d'un seuil de vitesse déterminé, commande l'activation d'au moins certaines sources de lumière ou des groupes de sources de lumière du premier agencement 6 de la première optique A. De plus, certaines sources de lumière ou des groupes de sources de lumière du premier agencement 6 de la première optique A génèrent de la lumière, si l'intensité de lumière ambiante détectée par le capteur de lumière 3 est inférieure au seuil de lumière déterminé. Comme susmentionné, les sources de lumière sélectionnées du second agencement 7 de sources de lumière sont activées indépendamment de la vitesse du véhicule calculée, c'est-à-dire dès le moment où l'intensité de lumière ambiante détectée par le capteur de lumière 3 est inférieure au seuil de lumière déterminé.

Comme indiqué ci-dessus, lorsque le véhicule n'est plus en utilisation, un interrupteur manuel permet de désactiver le dispositif d'éclairage avec toutes les sources de lumière. Ces sources de lumière peuvent être aussi désactivées après un temps déterminé sans mouvement par exemple après 5 minutes.

Le capteur de vitesse peut être un récepteur GPS ou équivalent 4a ou de préférence un capteur magnétique 4b pour capter le passage d'au moins un aimant permanent disposé sur un rayon ou la jante d'une roue du véhicule. Chaque impulsion magnétique de passage de l'aimant permanent à proximité du capteur magnétique 4b, et selon une cadence dans le temps générée par l'oscillateur basse fréquence, permet à l'unité de contrôle 2 de calculer la vitesse et le moment du dépassement du seuil de vitesse déterminé.

Le dispositif 1 d'éclairage peut comprendre encore ou recevoir un calendrier 3' des dates et heures (éphémérides) de chaque mois dans l'année d'un lieu d'utilisation du dispositif, à partir de laquelle la luminosité ambiante est jugée insuffisante. L'unité de contrôle 2 peut mémoriser ce calendrier 3' du lieu déterminé d'utilisation du dispositif pour contrôler l'activation des sources de lumière sélectionnées des optiques A, B, si par exemple le seuil de vitesse déterminé est aussi dépassé. Ce seuil de vitesse déterminé peut être fixé à 15 km/h ou 25 km/h, mais peut être défini à une autre valeur et mémorisé.

Il est aussi possible selon l'emplacement, de faire varier les seuils d'activation selon que le véhicule est dans une plaine ouverte ou dans une vallée étroite, où la lumière ambiante est plus rapidement faible.

Pour ce faire, il est prévu un premier bloc de variation d'intensité 12, qui comprend un ensemble de premiers variateurs 10 connectés à la source de tension d'alimentation Vdd. Ces premiers variateurs 10 sont encore reliés chacun à des premiers interrupteurs 8 respectifs, qui sont eux-mêmes reliés au premier agencement 6 de sources de lumière. Chaque premier interrupteur 8 est commandé par l'unité de contrôle 2 pour activer au moins certaines sources de lumière du premier agencement 6 de sources de lumière, si au moins l'intensité de lumière ambiante est insuffisante. Un second bloc de variation d'intensité 13 est prévu et comprend un ensemble de seconds variateurs 11 connectés à la source de tension d'alimentation Vdd. Ces seconds variateurs 11 sont encore reliés chacun à des seconds interrupteurs 9 respectifs, qui sont eux-mêmes reliés au second agencement 7 de sources de lumière. Chaque second interrupteur 9 est commandé par l'unité de contrôle 2 pour activer au moins certaines sources de lumière du second agencement 7 de sources de lumière, si au moins l'intensité de lumière ambiante est insuffisante.

Les premiers et seconds interrupteurs 8, 9 de chaque bloc de variation d'intensité 12, 13 sont de préférence des transistors MOS, tels que des transistors PMOS comme représentés, mais des transistors NMOS peuvent aussi être envisagés. La source de chaque premier transistor PMOS 8 est reliée à chaque premier variateur 10 respectif, alors que la source de chaque second transistor PMOS 9 est reliée à chaque second variateur 11 respectif. La grille de chaque premier transistor PMOS 8 est reliée à l'unité de contrôle 2 pour le rendre conducteur ou non conducteur. La grille du second transistor PMOS 9 est reliée à l'unité de contrôle 2 pour le rendre conducteur ou non conducteur.

Il est à noter que chaque variateur 10, 11 peut être une source de courant, dont le courant prévu pour passer dans chaque source de lumière ou groupe de sources de lumière est variable et augmente quand l'intensité de lumière ambiante diminue en dessous du seuil de lumière déterminé. La variation du courant de chaque variateur est contrôlée directement par l'unité de contrôle 2. Les sources de courant peuvent aussi être des sources à courant alternatif.

Il est à noter que le courant dans un variateur 10, 11 peut être différent d'un courant dans un autre variateur 10, 11 selon la commande de l'unité de contrôle 2. Cela permet de modifier l'intensité lumineuse d'une source de lumière ou d'un groupe de sources de lumière par rapport à une autre source de lumière ou un autre groupe de sources de lumière. Ceci permet de générer au final en fonction de la sélection des sources de lumière ou des groupes de sources de lumière de chaque agencement 6, 7 de sources de lumière d'orienter précisément le faisceau lumineux moyen généré en sortie des optiques A et B.

Dans une seconde variante de forme d'exécution du dispositif 1, le dispositif 1 d'éclairage comprend au moins un détecteur d'orientation ou d'inclinaison 5a, 5b, 5c relié à l'unité de contrôle 2. Lors de l'utilisation du véhicule, le détecteur d'orientation ou d'inclinaison 5a, 5b, 5c détermine par exemple une courbe effectuée par le véhicule en utilisation sur un chemin ou une route. Le détecteur d'orientation ou d'inclinaison 5a, 5b, 5c fournit un signal d'orientation ou d'inclinaison à l'unité de contrôle 2 pour sélectionner et régler en intensité lumineuse au moins certaines sources de lumière ou certains groupes de sources de lumière du premier agencement 6 de sources de lumière et/ou du second agencement 7 de sources de lumière. L'orientation de chaque faisceau de lumière est différente pour les sources de lumière sélectionnées ou les groupes de sources de lumière sélectionnées, que ce soit directement en sortie des sources de lumière ou des groupes de sources de lumière ou par combinaison avec un jeu de lentilles. Ainsi en fonction d'un virage effectué, le faisceau moyen de lumière des sources de lumière sélectionnées ou les groupes de sources de lumière sélectionnées est dirigé vers la droite pour un virage à droite ou vers la gauche pour un virage à gauche.

Aucune motorisation n'est donc nécessaire pour l'orientation des faisceaux de lumière des sources de lumière sélectionnées pour permettre d'orienter le faisceau moyen généré par chaque agencement 6, 7 de sources de lumière en fonction du virage ou courbe à effectuer avec le véhicule.

On peut imaginer dans cette seconde variante d'avoir les deux agencements 6, 7 de sources de lumière activés dès que l'intensité de la lumière ambiante est en dessous d'un seuil de lumière déterminé. Cependant il peut aussi être prévu d'activer uniquement certaines sources de lumière ou groupes de sources de lumière du second agencement 7 de sources de lumière, si la vitesse détectée par le capteur de vitesse 4a, 4b ne dépasse pas le seuil de vitesse déterminé.

Le détecteur d'orientation ou d'inclinaison peut être composé d'un potentiomètre 5a et/ou d'un magnétomètre 5b et/ou d'un inclinomètre 5c et/ou d'un accéléromètre 5c et/ou d'un gyromètre 5c comme il sera encore expliqué ci-après en référence aux figures 3a à 3c.

La figure 2 représente schématiquement un véhicule 100 sur une route 50 ou un chemin avec au moins certaines sources de lumière activées des deux agencements de sources de lumière des deux optiques A et B du dispositif 1 d'éclairage actif. Les deux agencements de sources de lumière sont activés, si la vitesse du véhicule est au-dessus d'un seuil de vitesse déterminé et si l'intensité de lumière ambiante est insuffisante, sinon uniquement le second agencement de sources de lumière de l'optique B est activé. Ainsi, l'intensité de lumière I_{LUM}(v, I_{AMB}) des sources de lumière sélectionnées de l'optique A dépend de la vitesse v du véhicule 100, qui peut être un vélo, et de l'intensité lumineuse ambiante I_{AMB}. L'intensité de lumière I_{LUM}(I_{AMB}) des sources de lumière sélectionnées de l'optique B ne dépend que de l'intensité lumineuse ambiante I_{AMB}.

Comme montré à la figure 2, il peut encore être prévu, que plus la vitesse du véhicule augmente, et plus le faisceau moyen de lumière généré par le premier agencement de sources de lumière de l'optique A augmente en intensité lumineuse. De plus, certaines sources de lumière de l'optique A peuvent être sélectionnées pour orienter le faisceau moyen de lumière du premier agencement de sources de lumière pour éclairer encore plus loin jusqu'à un azimut vertical, qui tend vers 0. L'intensité lumineuse des sources de lumière peut varier normalement proportionnellement à l'inverse de l'intensité de lumière ambiante, voire également par palier.

Les figures 3a, 3b, 3c montrent schématiquement un véhicule 100 sur une route 50 ou un chemin prenant un virage pour orienter le faisceau moyen généré des sources de lumière sélectionnées des optiques A et B du dispositif 1 d'éclairage actif. Chaque optique A, B peut être montée par exemple sur un guidon du vélo 100. Le ou les détecteurs d'orientation ou d'inclinaison sont par exemple un magnétomètre 5b ou un inclinomètre 5c ou un accéléromètre 5c ou un gyromètre 5c ou un potentiomètre 5a ou une combinaison de ces détecteurs comme précédemment mentionné.

Le détecteur d'orientation ou d'inclinaison peut être monté sur un support, tel qu'un casque de l'utilisateur E du véhicule 100 et pour fournir un signal d'orientation par une communication bidirectionnelle sans fil à l'unité de contrôle disposée sur le guidon du véhicule 100. Ceci permet de contrôler l'orientation du faisceau moyen généré par les sources de lumière sélectionnées des optiques A et B par un mouvement de la tête de l'utilisateur E du véhicule 100.

A la figure 3a, les deux agencements de sources de lumière des optiques A et B du dispositif 1 d'éclairage sont activés. Le faisceau moyen de lumière généré par les sources de lumière sélectionnées doit être orienté selon un angle β en fonction du virage effectué sur la route 50.

A la figure 3b, l'unité de contrôle tient compte d'un angle de rotation γ de la roue avant D du vélo et aussi du mouvement angulaire ε de la tête de l'utilisateur E du vélo par rapport à la direction de la roue arrière F.

A la figure 3c, il peut aussi être tenu compte de l'inclinaison du vélo avec l'utilisateur E d'un angle δ par rapport à la route 50 pour orienter les sources de lumière.

A partir de la description qui vient d'être faite, plusieurs variantes de réalisation d'un dispositif d'éclairage actif portable ou placé sur un véhicule à au moins une roue sont possibles sans sortir du cadre de l'invention définie par les revendications suivantes.

## Revendications

1. Dispositif (1) d'éclairage actif portable ou disposé sur un véhicule (100) à au moins une roue,
**caractérisé en ce que** le dispositif comprend :
- au moins une source d'alimentation électrique (Vdd),
- une première optique (A) avec un premier agencement (6) de sources de lumière pour une illumination à grande distance et contrôlées par une unité de contrôle (2) reliée à la source d'alimentation électrique (Vdd), et destinées à générer chacune ou par groupes un faisceau de lumière ayant une direction d'orientation différent en sortie du premier agencement (6) de sources de lumière,
- une seconde optique (B) avec un second agencement (7) de sources de lumière pour une illumination à courte distance et contrôlées par l'unité de contrôle (2) reliée à la source d'alimentation électrique (Vdd), et destinées à générer chacune ou par groupes un faisceau de lumière ayant une direction d'orientation différent en sortie du second agencement (7) de sources de lumière,
- un capteur de lumière (3) pour déterminer l'intensité lumineuse d'un endroit où se situe le véhicule (100) avec le dispositif (1) d'éclairage et pour fournir un signal de mesure à l'unité de contrôle (2), qui est agencée pour adapter l'intensité lumineuse de certaines sources de lumière ou de certains groupes de sources de lumière de la première optique (A) et/ou de la seconde optique (B) si l'intensité de lumière ambiante est en dessous d'un seuil de lumière déterminé, et
- un capteur de vitesse (4a, 4b) pour déterminer la vitesse du véhicule (100) en utilisation sur un chemin ou une route (50), et pour fournir un signal de mesure à l'unité de contrôle (2) pour commander l'activation du premier agencement (6) de sources de lumière de la première optique (A) à partir d'au moins un seuil de vitesse déterminé.

2. Dispositif (1) d'éclairage actif portable ou disposé sur un véhicule (100) à au moins une roue,
**caractérisé en ce que** le dispositif comprend :
- au moins une source d'alimentation électrique (Vdd),
- une première optique (A) avec un premier agencement (6) de sources de lumière pour une illumination à grande distance, et contrôlées par une unité de contrôle (2) reliée à la source d'alimentation électrique (Vdd), et destinées à générer chacune ou par groupes un faisceau de lumière ayant une direction d'orientation différent en sortie du premier agencement (6) de sources de lumière,
- une seconde optique (B) avec un second agencement (7) de sources de lumière pour une illumination à courte distance, et contrôlées par l'unité de contrôle (2) reliée à la source d'alimentation électrique (Vdd), et destinées à générer chacune ou par groupes un faisceau de lumière ayant une direction d'orientation différent en sortie du second agencement (7) de sources de lumière,
- un capteur de lumière (3) relié à l'unité de contrôle pour déterminer l'intensité lumineuse d'un endroit où se situe le véhicule (100) avec le dispositif (1) d'éclairage et qui est agencée pour adapter l'intensité lumineuse des sources de lumière ou des groupes de sources de lumière de la première optique (A) et/ou de la seconde optique (B), si l'intensité de lumière ambiante est en dessous d'un seuil de lumière déterminé, et
- un détecteur d'orientation ou d'inclinaison (5a, 5b, 5c) pour fournir un signal d'orientation ou d'inclinaison à l'unité de contrôle (2) pour sélectionner et régler en intensité lumineuse au moins certaines sources de lumière ou certains groupes de sources de lumière du premier agencement (6) de sources de lumière et/ou du second agencement (7) de sources de lumière.

3. Dispositif (1) selon l'une des revendications précédentes, **caractérisé en ce que** l'unité de contrôle (2) est agencée, dès l'utilisation du véhicule (100), pour contrôler l'éclairage des sources de lumière des première et seconde optiques (A, B) de manière automatique.

4. Dispositif (1) selon la revendication 1, **caractérisé en ce que** le dispositif comprend un détecteur d'orientation ou d'inclinaison (5a, 5b, 5c) pour fournir un signal d'orientation ou d'inclinaison à l'unité de contrôle (2) pour sélectionner et régler en intensité lumineuse au moins certaines sources de lumière ou certains groupes de source de lumière du premier agencement (6) de sources de lumière et/ou du second agencement (7) de sources de lumière.

5. Dispositif (1) selon la revendication 2, **caractérisé en ce qu'**il comprend un capteur de vitesse (4a, 4b) pour déterminer la vitesse du véhicule (100) en utilisation sur un chemin ou une route (50), et pour fournir un signal de mesure à l'unité de contrôle (2) pour commander l'activation du premier agencement (6) de sources de lumière de la première optique (A) à partir d'au moins un seuil de vitesse déterminé.

6. Dispositif (1) selon l'une des revendications 1 et 2, **caractérisé en ce que** les premier et second agencements (6, 7) de sources de lumière comprennent chacun une matrice de diodes électroluminescentes agencées pour générer chacune ou par groupes un faisceau de lumière ayant une direction d'illumination différente en sortie des premier et second agencements (6, 7) de sources de lumière, et **en ce que** le premier agencement (6) de diodes électroluminescentes est prévu pour une illumination à grande distance, alors que le second agencement (7) de diodes électroluminescentes est prévu pour une illumination à courte distance.

7. Dispositif (1) selon l'une des revendications 1 et 2, **caractérisé en ce que** l'unité de contrôle (2) est agencée pour adapter progressivement l'intensité lumineuse des sources de lumière du premier agencement (6) de la première optique (A) et/ou du second agencement (7) de la seconde optique (B) par rapport à l'intensité de lumière captée par le capteur de lumière (3).

8. Dispositif (1) selon l'une des revendications 1 et 2, **caractérisé en ce que** l'unité de contrôle (2) est agencée pour adapter par paliers l'intensité lumineuse des sources de lumière du premier agencement (6) de la première optique (A) et/ou du second agencement (7) de la seconde optique (B) par rapport à l'intensité de lumière captée par le capteur de lumière (3).

9. Dispositif (1) selon l'une des revendications 1 et 2, **caractérisé en ce que** l'unité de contrôle (2) est un microcontrôleur ayant une mémoire dans laquelle sont mémorisées des dates et heures du jour de l'endroit où se trouve le dispositif d'éclairage (1) pour permettre le fonctionnement des sources de lumière des premier et second agencements (6, 7) des première et seconde optiques (A, B) à partir d'une certaine heure de la journée d'une date donnée.

10. Dispositif (1) selon la revendication 6, **caractérisé en ce que** l'unité de contrôle (2) est un microcontrôleur ayant une mémoire dans laquelle est mémorisé un programme de sélection et de réglage d'intensité des diodes électroluminescentes des premier et second agencements (6, 7) de sources de lumière de manière à fournir une lumière moyenne à distance variable en fonction de l'intensité lumineuse détectée par le capteur de lumière (3).

11. Dispositif (1) selon l'une des revendications 2 et 4, **caractérisé en ce que** le détecteur d'orientation ou d'inclinaison (5a, 5b, 5c) est composé d'un magnétomètre (5b) et/ou d'un inclinomètre (5c) et/ou d'un accéléromètre (5c) et/ou d'un gyromètre (5c) et/ou d'un potentiomètre (5a).

12. Dispositif (1) selon l'une des revendications 1 et 5, **caractérisé en ce que** le capteur de vitesse (4a, 4b) est composé d'un récepteur GPS ou équivalent (4a) ou d'un capteur magnétique (4b) monté sur une fourche d'une roue du véhicule (100) pour détecter le passage d'un aimant permanent monté sur un rayon ou une jante de la roue afin de déterminer la vitesse du véhicule (100).

13. Dispositif (1) selon l'une des revendications 2 et 4, **caractérisé en ce que** le détecteur d'orientation ou d'inclinaison (5a, 5b, 5c) est agencé pour être monté sur un support, tel qu'un casque du conducteur du véhicule et pour fournir un signal d'orientation ou d'inclinaison par une communication bidirectionnelle sans fil à l'unité de contrôle (2) disposée sur le véhicule avec les première et seconde optiques (A, B) pour orienter les sources de lumière des premier et second agencements (6, 7) de sources de lumière par un mouvement de la tête du conducteur (E) du véhicule (100).
